# EUROPEAN PATENT SPECIFICATION

(11) **EP 3 012 508 B1**
(45) Date of publication and mention of the grant of the patent: **01.04.2020**
(21) Application number: 14813203.8
(22) Date of filing: 30.05.2014
(51) Int. Cl.: F17C 3/08, B63B 25/16, B65D 90/02, F17C 1/00

(54) **DOUBLE-SHELLED TANK AND LIQUEFIED GAS TRANSPORT VESSEL**
DOPPELWANDIGER TANK UND FLÜSSIGGASTRANSPORTSCHIFF
CITERNE À DOUBLE PAROI ET CUVE DE TRANSPORT DE GAZ LIQUÉFIÉ

(30) Priority: 19.06.2013 JP 2013128848
(43) Date of publication of application: 27.04.2016
(73) Proprietor: Kawasaki Jukogyo Kabushiki Kaisha, Kobe-shi, Hyogo 650-8670 (JP)
(72) Inventor: URAGUCHI, Ryosuke, Hyogo 673-8666 (JP); MURAKAMI, Asako, Hyogo 650-8670 (JP); IZUMI, Naruyoshi, Hyogo 673-8666 (JP); SANO, Atsushi, Hyogo 673-8666 (JP); MURAGISHI, Osamu, Hyogo 673-8666 (JP)
(74) Representative: Dehns
(86) International application number: PCT/JP2014/002875
(87) International publication number: WO 2014/203471

(56) References cited:
- EP-A1- 2 937 297
- WO-A1-2012/032219
- JP-A- S 636 300
- JP-A- S51 148 816
- JP-A- 2001 508 857
- JP-A- 2014 118 206
- US-A- 3 984 994

## Description

The present invention relates to a double-shell tank used for transporting and storing a liquefied gas and to a liquefied gas carrier ship including the double-shell tank.

One example of a known double-shell tank used for transporting and storing a liquefied gas is a horizontal type cylindrical double-shell tank disclosed in Patent Literature 1. The double-shell tank includes an inner shell and an outer shell. The inner shell stores the liquefied gas. The outer shell forms a vacuum space as a thermal insulating layer between the inner shell and the outer shell.

WO 201/032219 and EP 2937297 disclose other horizontal type cylindrical double-shell tanks that are known in the art.

PTL 1: Japanese Laid-Open Patent Application Publication No. H06-159593

In some cases, in the above-described double-shell tank, the inner shell is provided with an inner shell dome for putting pipes penetrating the inner shell into one place. For example, the inner shell dome is formed to protrude upward from an inner shell main part, which stores the liquefied gas. In this case, the outer shell is provided with an outer shell dome, which surrounds the inner shell dome in a non-contacting manner such that the inner shell dome is entirely covered by a vacuum space, and pipes are disposed in a manner to penetrate the inner shell dome and the outer shell dome.

Since the liquefied gas stored in the inner shell is a low-temperature liquefied gas, when the liquefied gas is fed into the inner shell, thermal contraction of the inner shell occurs. Meanwhile, the temperature of the outer shell is substantially the same as the atmospheric temperature even when the liquefied gas is fed into the inner shell, because there is a vacuum space between the outer shell and the inner shell. Therefore, in the structure in which the inner and outer shells are provided with the respective domes as described above, the position of the outer shell dome hardly changes, whereas the inner shell dome moves downward due to the thermal contraction of the inner shell. In addition, contraction of the inner shell dome also occurs. In particular, in a horizontal type cylindrical double-shell tank, in a case where a position at which the inner shell is fixed is away from the inner shell dome, there is a possibility that the relative positional relationship between the inner shell dome and the outer shell dome in the axial direction of the tank greatly changes due to the thermal contraction of the inner shell. Consequently, an excessive load is exerted on the pipes that penetrate the inner shell dome and the outer shell dome.

In view of the above, an object of the present invention is to provide a double-shell tank capable of suppressing the load exerted on the pipes penetrating the inner shell dome and the outer shell dome, and to provide a liquefied gas carrier ship including the double-shell tank.

According to the present invention, there is provided a horizontal type cylindrical double-shell tank, comprising: an inner shell including an inner shell main part storing a liquefied gas and an inner shell dome protruding in a particular direction from the inner shell main part; an outer shell including an outer shell main part surrounding the inner shell main part and an outer shell dome surrounding the inner shell dome; and a pipe; the horizontal type cylindrical double-shell tank being characterised in that it further comprises: a deformable member deformable in the particular direction and incorporated in the outer shell dome so as to divide the outer shell dome into a fixed part located at a base side with respect to the deformable member and a movable part located at a distal end side with respect to the deformable member; a first restricting mechanism disposed between the movable part of the outer shell dome and the inner shell dome, the first restricting mechanism restricting movement of the movable part of the outer shell dome and movement of the inner shell dome relative to each other in the particular direction while allowing the inner shell dome to contract; a second restricting mechanism disposed between the fixed part of the outer shell dome and the inner shell dome, the second restricting mechanism restricting movement of the inner shell dome in a radial direction while allowing the inner shell dome to contract and allowing the inner shell dome to move in the particular direction relative to the fixed part; and in that the pipe penetrates the movable part of the outer shell dome and the inner shell dome.

According to the above-described configuration, when thermal contraction of the inner shell occurs, the first restricting mechanism moves the movable part of the outer shell dome in the particular direction in a manner to follow the inner shell dome. In addition, while the inner shell dome is moving, the inner shell dome is guided relative to the fixed part of the outer shell dome by the second restricting mechanism. That is, the position of the inner shell dome relative to the movable part of the outer shell dome is maintained. This makes it possible to suppress a load from being exerted on the pipe. It should be noted that the amount of contraction of the inner shell dome is small. Therefore, for example, by forming the pipe such that the pipe is bent between the inner shell dome and the outer shell dome, a load exerted on the pipe due to the contraction can be absorbed by flection of the pipe.

For example, the pipe may be bent between the inner shell dome and the outer shell dome.

The second restricting mechanism may include: radial-direction supporting members disposed around the inner shell dome; and sliding portions each disposed between either the fixed part of the outer shell dome or the inner shell dome and a corresponding one of the radial-direction supporting members. According to this configuration, when the inner shell dome moves due to thermal contraction of the inner shell, shear stress can be prevented from being exerted on the radial-direction supporting members.

The radial-direction supporting members may be tubular members each extending in the radial direction with respect to the inner shell dome. According to this configuration, the second restricting mechanism, which forms a thermal transfer passage from the outer shell to the inner shell, has a hollow structure. This makes it possible to suppress entry of heat into the inner shell via the second restricting mechanism.

Each of the sliding portions may include a first sliding member and a second sliding member, the first sliding member being disposed at the fixed part side of the outer shell dome and including an inner tapered surface, which slopes away from the inner shell dome in a protruding direction of the inner shell dome, the second sliding member being disposed at the inner shell dome side and including an outer tapered surface, which makes surface contact with the inner tapered surface. This configuration makes it possible, with a simple configuration, to allow the inner shell dome to contract and allow the inner shell dome to move in the particular direction relative to the fixed part of the outer shell dome.

The first restricting mechanism may include: particular-direction supporting members disposed around the inner shell dome; and a pair of support plates, one of which is fixed to the movable part of the outer shell dome and the other of which is fixed to the inner shell dome, the support plates sandwiching the particular-direction supporting members. According to this configuration, the structure of the first restricting mechanism can be made simple.

The particular-direction supporting members may be tubular members each extending in the particular direction. According to this configuration, the first restricting mechanism, which forms a thermal transfer passage from the outer shell to the inner shell, has a hollow structure. This makes it possible to suppress entry of heat into the inner shell via the first restricting mechanism.

Each of the tubular members may be made of glass fiber reinforced plastic. According to this configuration, by using glass fiber reinforced plastic (GFRP), whose thermal conductivity is low, as the tubular members, entry of heat via the first restricting mechanism and/or the second restricting mechanism can be further suppressed.

The above double-shell tank may further include a pair of support mechanisms disposed between the inner shell main part and the outer shell main part, the support mechanisms supporting the inner shell main part at respective positions that are spaced apart from each other in an axial direction of the tank, such that the inner shell main part is slidable. This configuration allows both the support mechanisms to have the same structure. In addition, according to this configuration, thermal contraction of the inner shell occurs such that the center of the thermal contraction is the inner shell dome, whose movement in the radial direction is restricted by the second restricting mechanism. This makes it possible to prevent abnormal force from being exerted on the second restricting mechanism.

The inner shell dome may be provided with an inner shell manhole, and the outer shell dome may be provided with an outer shell manhole at a position corresponding to a position of the inner shell manhole. According to this configuration, the inner shell dome and the outer shell dome can be effectively utilized to form an inspection passage for inspecting the inside of the inner shell.

A space between the inner shell and the outer shell may be a vacuum space. The double-shell tank may further include an annular blocking member disposed between the inner shell dome and the outer shell dome, the blocking member dividing the vacuum space into a first space and a second space, the first space including a space between the inner shell manhole and the outer shell manhole, the second space being positioned at the inner shell main part side. According to this configuration, when the outer shell manhole is opened, only the first space, which is a small part of the vacuum space, becomes open to the atmosphere. Therefore, the volume of the space that needs to be made vacuum again after closing the outer shell manhole can be reduced.

The blocking member may be disposed at the inner shell main part side as seen from a position where the inner shell dome and the outer shell dome are penetrated by the pipe. According to this configuration, a part of the pipe, the part being positioned between the inner shell dome and the outer shell dome, can be inspected when the outer shell manhole is opened.

For example, the deformable member may be a bellows pipe.

A liquefied gas carrier ship according to the present invention includes the above double-shell tank.

According to the present invention, in the double-shell tank, the load exerted on the pipe penetrating the inner shell dome and the outer shell dome can be suppressed.
FIG. 1 is a sectional side view of a part of a liquefied gas carrier ship, on which a double-shell tank according to Embodiment 1 of the present invention is mounted.
FIG. 2 is a sectional front view taken along a line II-II of FIG. 1.
FIG. 3 is a sectional front view of an essential part of the double-shell tank according to Embodiment 1.
FIG. 4 is a sectional plan view taken along a line IV-IV of FIG. 3.
FIG. 5 is a sectional plan view taken along a line V-V of FIG. 3.
FIG. 6 is a sectional front view showing one variation of Embodiment 1.
FIG. 7 is a sectional front view showing another variation of Embodiment 1.
FIG. 8 is a sectional front view of an essential part of a double-shell tank according to Embodiment 2 of the present invention.
FIG. 9 is a sectional front view of an essential part of a double-shell tank according to Embodiment 3 of the present invention.
FIG. 10 is a sectional front view of an essential part of a double-shell tank according to Embodiment 4 of the present invention.
FIG. 11 is a sectional front view of an essential part of a double-shell tank according to Embodiment 5 of the present invention.
FIG. 12 is a sectional front view showing one variation of Embodiment 5.

### (Embodiment 1)

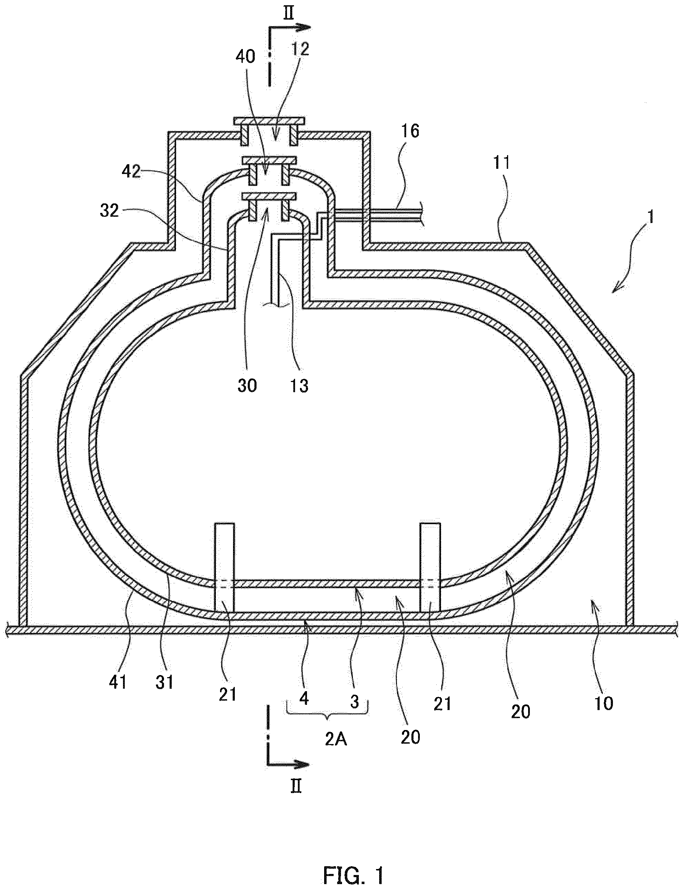

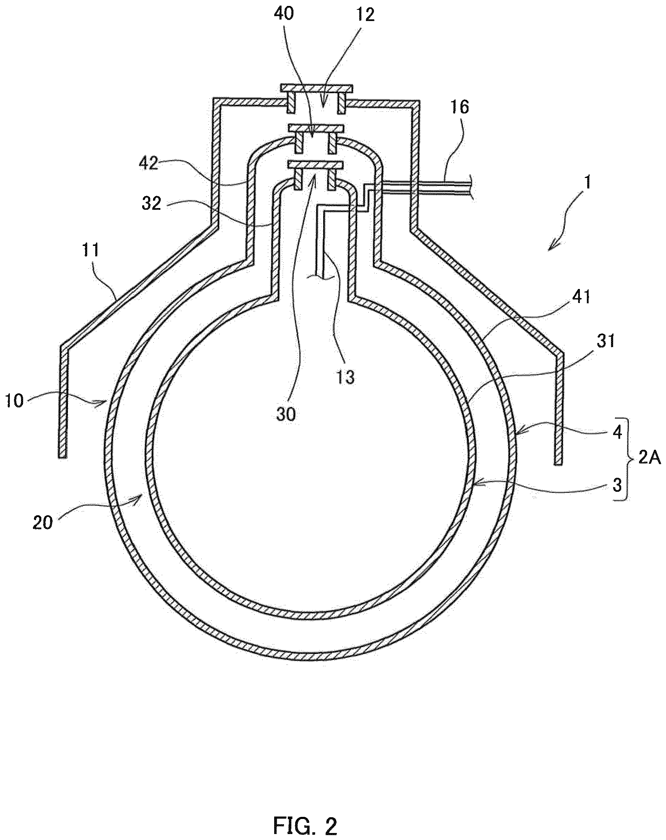

FIG. 1 and FIG. 2 each show a part of a liquefied gas carrier ship 1, on which a double-shell tank 2A according to Embodiment 1 of the present invention is mounted. The double-shell tank 2A is a horizontal type cylindrical tank. In general, the double-shell tank 2A is disposed such that the axial direction of the tank 2A is parallel to the ship length direction.

Specifically, the double-shell tank 2A includes an inner shell 3 and an outer shell 4. The outer shell 4 forms a space 20 around the inner shell 3. In the present embodiment, the space 20 between the inner shell 3 and the outer shell 4 is a vacuum space. However, as an alternative, the space 20 between the inner shell 3 and the outer shell 4 may be filled with a gas having low thermal conductivity, such as argon gas.

The inner shell 3 includes an inner shell main part 31 storing a liquefied gas and an inner shell dome 32 protruding in a particular direction from the inner shell main part 31. In the present embodiment, the particular direction is the vertical direction, and the inner shell dome 32 protrudes upward from the inner shell main part 31. The particular direction, which defines the protruding direction of the inner shell dome 32, may alternatively be a diagonal direction, for example.

The inner shell main part 31 includes: a body portion extending laterally with a constant cross-sectional shape; and hemispherical sealing portions sealing openings on both sides of the body portion. Alternatively, each sealing portion may have a flat shape perpendicular to the body portion or may be dish-shaped.

For example, the liquefied gas stored in the inner shell main part 31 is liquefied petroleum gas (LPG, about -45 °C), liquefied ethylene gas (LEG, about -100 °C), liquefied natural gas (LNG, about -160 °C), or liquefied hydrogen (LH₂, about -250 °C).

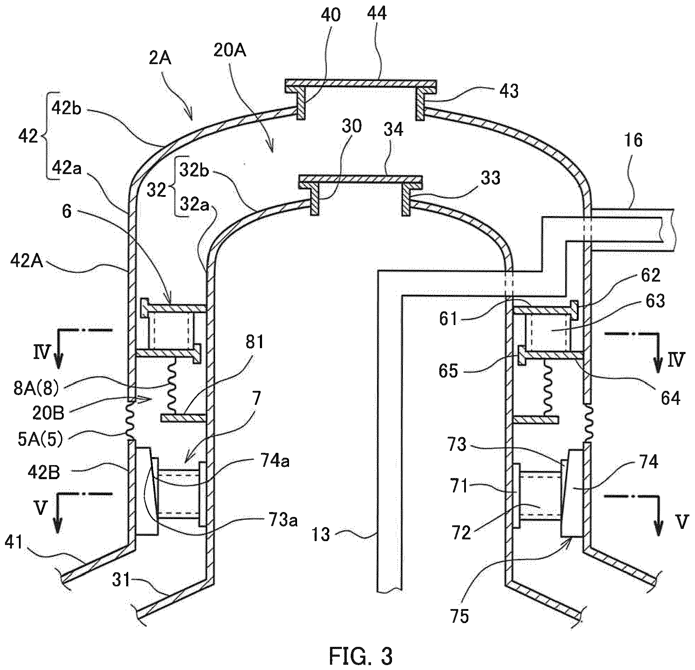

As shown in FIG. 3, the inner shell dome 32 includes: a peripheral wall 32a extending upward from the inner shell main part 31; and a dish-shaped ceiling wall 32b, which is raised upward from the upper end of the peripheral wall 32a. The ceiling wall 32b may have a different shape, for example, a hemispherical shape.

The outer shell 4 includes an outer shell main part 41 surrounding the inner shell main part 31 and an outer shell dome 42 surrounding the inner shell dome 32. That is, the outer shell main part 41 has the shape of the inner shell main part 31, but is larger than the inner shell main part 31, and the outer shell dome 42 has the shape of the inner shell dome 32, but is larger than the inner shell dome 32.

As shown in FIG. 3, the outer shell dome 42 includes: a peripheral wall 42a extending upward from the outer shell main part 41; and a dish-shaped ceiling wall 42b, which is raised upward from the upper end of the peripheral wall 42a. The ceiling wall 42b may have a different shape, for example, a hemispherical shape.

The outer shell main part 41 is supported, for example, by saddles (not shown) provided on a hull. A pair of support mechanisms 21 (see FIG. 1) is disposed between the inner shell main part 31 and the outer shell main part 41. These support mechanisms 21 support the inner shell main part 31 at respective positions that are spaced apart from each other in the axial direction of the tank 2A, such that the inner shell main part 31 is slidable in the axial direction of the tank 2A. This configuration allows both the support mechanisms 21 to have the same structure. It should be noted that, from the viewpoint of suppressing the entry of heat from the outside of the tank 2A into the inner shell 3, it is preferable that the area of contact between the inner shell 3 and the support mechanisms 21 be small. For example, it is desirable that both the support mechanisms 21 have a hollow structure.

A submerged pump (not shown) for discharging the liquefied gas from the inside of the tank 2A to the outside is disposed at the inner bottom of the inner shell 3. The double-shell tank 2A is provided with various pipes 13, such as a liquefied gas pipe and an electric wire pipe. The pipes 13 penetrate the inner shell dome 32 and the outer shell dome 42. It should be noted that each of FIG. 1 and FIG. 2 shows only one pipe that represents the pipes 13.

In the present embodiment, each pipe 13 is bent to be crank-shaped between the inner shell dome 32 and the outer shell dome 42 (i.e., bent by 90 degrees twice), and penetrates the peripheral wall 32a of the inner shell dome 32 and the peripheral wall 42a of the outer shell dome 42. However, as an alternative, each pipe 13 may be bent by 90 degrees only once between the inner shell dome 32 and the outer shell dome 42 to penetrate the peripheral wall 32a of the inner shell dome 32 and the ceiling wall 42b of the outer shell dome 42 or to penetrate the ceiling wall 32b of the inner shell dome 32 and the peripheral wall 42a of the outer shell dome 42. The degree of bending of each pipe 13 is not limited to 90 degrees. Alternatively, each pipe 13 may be bent to be U-shaped.

A thermal insulating material (not shown) covers a part of each pipe 13, the part being positioned between the inner shell dome 32 and the outer shell dome 42. This makes it possible to suppress the entry of heat from the outside of the tank 2A into the inner shell 3 through the pipes 13. Outside the outer shell 4, each pipe 13 is accommodated in a vacuum pipe 16, and thereby heat transfer from the atmosphere to the pipes 13 is suppressed.

The ceiling wall 32b of the inner shell dome 32 is provided with an inner shell manhole 30 so that the submerged pump disposed in the inner shell 3 can be inspected. The ceiling wall 42b of the outer shell dome 42 is provided with an outer shell manhole 40 at a position corresponding to the position of the inner shell manhole 30. Specifically, as shown in FIG. 3, a manhole pipe 33, which defines the inner shell manhole 30, is mounted to the ceiling wall 32b of the inner shell dome 32, and a manhole pipe 43, which defines the outer shell manhole 40, is mounted to the ceiling wall 42b of the outer shell dome 42. Manhole covers 34 and 44 are fixed to flanges provided at the upper ends of the manhole pipes 33 and 43. It should be noted that the position where the inner shell manhole 30 is provided may be the center of the ceiling wall 32b or may be a position displaced from the center of the ceiling wall 32b.

Returning to FIG. 1 and FIG. 2, the liquefied gas carrier ship 1 is equipped with a tank cover 11 covering the double-shell tank 2. For example, an inert gas such as nitrogen gas is enclosed in a space 10 between the double-shell tank 2A and the tank cover 11. The tank cover 11 is provided with an outermost manhole 12 at a position corresponding to the position of the outer shell manhole 40.

The above-described pipes 13 and vacuum pipe 16 penetrate the tank cover 11. As described below, in the present embodiment, the outer shell dome 42 is configured to be displaceable in the vertical direction. Therefore, in order to absorb relative displacement between the outer shell dome 42 and the tank cover 11, the pipes 13 may be bent between the outer shell 4 and the tank cover 11, or a vacuum double bellows pipe may be adopted outside the outer shell 4.

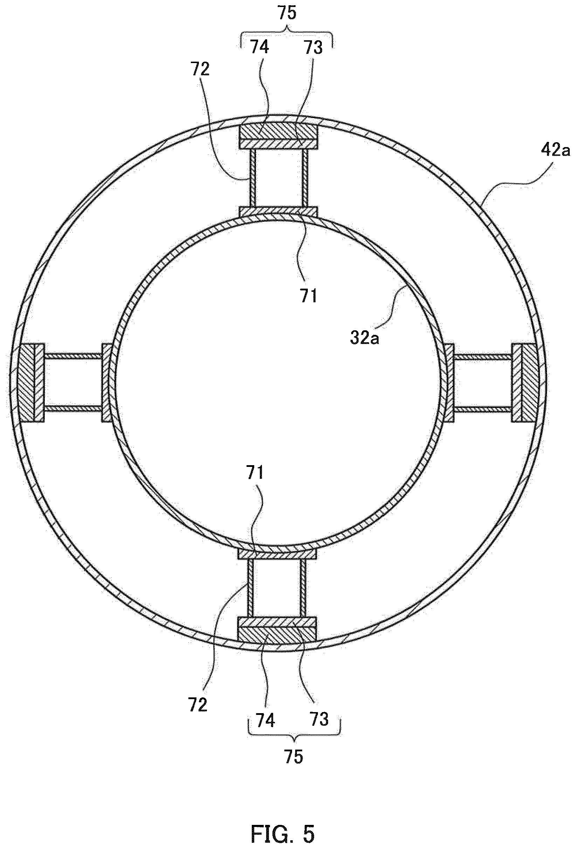

In the present embodiment, as described above, the inner shell main part 31 is supported such that the inner shell main part 31 is slidable in the axial direction of the tank 2A, whereas the inner shell dome 32 is fixed to the outer shell dome 42 in the horizontal direction. Hereinafter, with reference to FIGS. 3 to 5, the structure around the inner shell dome 32 is described in detail.

The peripheral wall 42a of the outer shell dome 42 incorporates therein a deformable member 5 deformable in the aforementioned particular direction (in the present embodiment, the vertical direction), which defines the protruding direction of the inner shell dome 32. Specifically, a distal end side part of the outer shell dome 42 as seen from the deformable member 5 is a movable part 42A. A base side part of the outer shell dome 42 as seen from the deformable member 5 is a fixed part 42B. The deformable member 5 is disposed at the outer shell main part 41 side as seen from a position where the outer shell dome 42 is penetrated by the pipes 13 (in the present embodiment, the deformable member 5 is disposed below the position). In other words, the pipes 13 penetrate the movable part 42A of the outer shell dome 42. In the present embodiment, a bellows pipe 5A expandable and contractable in the aforementioned particular direction is adopted as the deformable member 5.

A first restricting mechanism 6 is disposed between the movable part 42A of the outer shell dome 42 and the inner shell dome 32, and a second restricting mechanism 7 is disposed between the fixed part 42B of the outer shell dome 42 and the inner shell dome 32. In the present embodiment, the first restricting mechanism 6 and the second restricting mechanism 7 are disposed between the peripheral wall 42a of the outer shell dome 42 and the peripheral wall 32a of the inner shell dome 32.

The first restricting mechanism 6 restricts movement of the movable part 42A of the outer shell dome 42 and movement of the inner shell dome 32 relative to each other in the particular direction while allowing the inner shell dome 32 to contract (more exactly, to deform in its radial direction) when thermal contraction of the inner shell 3 occurs. Specifically, the first restricting mechanism 6 includes: a plurality of (four in the diagram) particular-direction supporting members (hereinafter, "first supporting members") 63 disposed around the inner shell dome 32 at regular angular intervals; and a pair of support plates 61 and 64 sandwiching the first supporting members 63 in the particular direction.

Although the first supporting members 63 are disposed around the inner shell dome 32 at regular angular intervals in this example, the arrangement of the first supporting members 63 is not thus limited. The first supporting members 63 may be disposed in any manner, so long as the movement of the movable part 42A of the outer shell dome 42 and the movement of the inner shell dome 32 relative to each other can be restricted stably. For example, the first supporting members 63 may be disposed symmetrically. In the present embodiment, each of the first supporting members 63 is a tubular member extending in the particular direction. The cross-sectional shape of the tubular member may be round, or may be polygonal such as square. It should be noted that each of the first supporting members 63 may be a solid-core block.

In the present embodiment, the support plate 64 positioned under the first supporting members 63 is ring-shaped and fixed to the movable part 42A of the outer shell dome 42, whereas the support plate 61 positioned over the first supporting members 63 is formed by rectangular pieces 61a and fixed to the inner shell dome 32. However, as an alternative, the support plate 61 positioned over the first supporting members 63 may be ring-shaped similar to the support plate 64 positioned under the first supporting members 63.

A flange 65, which is engaged with the first supporting members 63, is provided on the inner periphery of the support plate 64 positioned under the first supporting members 63. Flanges 62, which are engaged with the first supporting members 63, are each provided on the distal end of one of the pieces 61a forming the support plate 61 positioned over the first supporting members 63. It should be noted that a gap is formed between either the flange 65 or the flanges 62 and the first supporting members 63 for the purpose of allowing the inner shell dome 32 to contract although the gap is not shown in the drawing.

Each of the tubular members serving as the first supporting members 63 may be made of carbon fiber reinforced plastic (CFRP) or different FRP (e.g., fabric reinforced phenolic resin), or may be made of a metal. However, it is desirable that each of the tubular members be made of glass fiber reinforced plastic (GFRP).

The second restricting mechanism 7 restricts movement of the inner shell dome 32 in the radial direction while allowing the inner shell dome 32 to contract and allowing the inner shell dome 32 to move in the aforementioned particular direction relative to the fixed part 42B of the outer shell dome 42 when thermal contraction of the inner shell 3 occurs. Since the second restricting mechanism 7 restricts the movement of the inner shell dome 32 in the radial direction, movement of the inner shell dome 32 relative to the movable part 42A of the outer shell dome 42 due to oscillation of the ship can be suppressed, which contributes to suppressing a load from being exerted on the pipes 13.

Specifically, the second restricting mechanism 7 includes: radial-direction supporting members (hereinafter, "second supporting members") 72 disposed around the inner shell dome 32 at regular angular intervals; and sliding portions 75 each disposed between the fixed part 42B of the outer shell dome 42 and a corresponding one of the second supporting members 72.

In the present embodiment, the second supporting members 72 are tubular members each extending in the radial direction with respect to the inner shell dome 32. The cross-sectional shape of each tubular member may be round, or may be polygonal such as square. It should be noted that each of the second supporting members 72 may be a solid-core block. In the present embodiment, the second supporting members 72 are joined to the inner shell dome 32 via respective plates 71 with curved surface finishing. Accordingly, an end surface of each of the tubular members serving as the second supporting members 72 can be made flat.

Each of the sliding portions 75 includes: a first sliding member 74 disposed at the fixed part 42B side of the outer shell dome 42; and a second sliding member 73 disposed at the inner shell dome 32 side. In the present embodiment, the first sliding members 74 are fixed to the fixed part 42B of the outer shell dome 42, and the second sliding members 73 are fixed to the inner shell dome 32 via the second supporting members 72. Each of the first sliding members 74 includes an inner tapered surface 74a, which slopes away from the inner shell dome 32 in the protruding direction of the inner shell dome 32. Each of the second sliding members 73 includes an outer tapered surface 73a, which makes surface contact with the inner tapered surface 74a of a corresponding one of the first sliding members 74.

Each of the tubular members serving as the second supporting members 72 may be made of carbon fiber reinforced plastic (CFRP) or different FRP (e.g., fabric reinforced phenolic resin), or may be made of a metal. However, it is desirable that each of the tubular members be made of glass fiber reinforced plastic (GFRP).

In the present embodiment, a blocking member 8 is disposed between the inner shell dome 32 and the outer shell dome 42. The blocking member 8 is an annular member, which divides the vacuum space 20 between the inner shell 3 and the outer shell 4 into a first space 20A and a second space 20B. The first space 20A includes a space between the inner shell manhole 30 and the outer shell manhole 40. The second space 20B is positioned at the inner shell main part 31 side. In the present embodiment, the blocking member 8 is disposed at the inner shell main part 31 side as seen from a position where the inner shell dome 32 and the outer shell dome 42 are penetrated by the pipes 13 (in the present embodiment, the blocking member 8 is disposed below the position). In the present embodiment, a bellows pipe 8A extending in the aforementioned particular direction is used as the blocking member 8. One end (lower end) of the blocking member 8 is fixed to a ring member 81 protruding radially outward from the peripheral wall 32a of the inner shell dome 32, and the other end (upper end) of the blocking member 8 is fixed to the lower support plate 64 of the first restricting mechanism 6.

In the double-shell tank 2A with the above-described configuration, when thermal contraction of the inner shell 3 occurs, the first restricting mechanism 6 moves the movable part 42A of the outer shell dome 42 in the vertical direction in a manner to follow the inner shell dome 32. In addition, while the inner shell dome 32 is moving, the inner shell dome 32 is guided relative to the fixed part 42B of the outer shell dome 42 by the second restricting mechanism 7. That is, the position of the inner shell dome 32 relative to the movable part 42A of the outer shell dome 42 is maintained. This makes it possible to suppress a load from being exerted on the pipes 13. It should be noted that the amount of contraction of the inner shell dome 32 is small. Therefore, by forming the pipes 13 such that the pipes 13 are bent between the inner shell dome 32 and the outer shell dome 42 as in the present embodiment, a load exerted on the pipes 13 due to the contraction can be absorbed by flection of the pipes 13.

Moreover, in the present embodiment, the inner shell main part 31 is slidably supported by the pair of support mechanisms 21. Accordingly, thermal contraction of the inner shell 3 occurs such that the center of the thermal contraction is the inner shell dome 32, whose movement in the radial direction is restricted by the second restricting mechanism 7. This makes it possible to prevent abnormal force from being exerted on the second restricting mechanism 7.

Furthermore, the second restricting mechanism 7 includes the sliding portions 75, each of which is disposed between the fixed part 42B of the outer shell dome 42 and a corresponding one of the supporting members 72. Accordingly, when the inner shell dome 32 moves due to thermal contraction of the inner shell 3, shear stress can be prevented from being exerted on the second supporting members 72. By providing the sliding portions 75 separately from the second supporting members 72, the shape of each second supporting member 72 can be made simple while maintaining the slidability by means of the sliding portions 75.

In addition, the sliding portions 75 of the second restricting mechanism 7 are formed by the first sliding members 74 each having the tapered surface 74a and the second sliding members 73 each having the tapered surface 73a. This makes it possible, with a simple configuration, to allow the inner shell dome 32 to contract and allow the inner shell dome 32 to move in the particular direction relative to the fixed part 42B of the outer shell dome 42. Specifically, the inner shell dome 32, which moves due to thermal contraction of the inner shell 3, can be kept restricted at the center of the outer shell dome 42, and by means of the tapered surfaces 73a and 74a, which guide the contracting inner shell dome 32 in the moving direction, favorable slidability can be obtained even in a vacuum environment as in the present embodiment where slidability degradation is caused.

Still further, in the present embodiment, since the second supporting members 72 are tubular members, the second restricting mechanism 7, which forms a thermal transfer passage from the outer shell 4 to the inner shell 3, has a hollow structure. This makes it possible to suppress entry of heat into the inner shell 3 via the second restricting mechanism 7.

Still further, in the present embodiment, the first restricting mechanism 6 is configured such that the pair of support plates 61 and 64 sandwiches the first supporting members 63. In this manner, the structure of the first restricting mechanism 6 can be simplified. Still further, in the present embodiment, since the first supporting members 63 are tubular members, the first restricting mechanism 6, which forms a thermal transfer passage from the outer shell 4 to the inner shell 3, has a hollow structure. This makes it possible to suppress entry of heat into the inner shell 3 via the first restricting mechanism 6.

As previously mentioned, desirably, the tubular members serving as the first supporting members 63 of the first restricting mechanism 6 and/or the tubular members serving as the second supporting members 72 of the second restricting mechanism 7 are made of GFRP. By using GFRP, whose thermal conductivity is low, as the tubular members, entry of heat via the first restricting mechanism 6 and/or the second restricting mechanism 7 can be further suppressed.

Still further, in the present embodiment, the vacuum space 20 between the inner shell 3 and the outer shell 4 is divided by the blocking member 8 into the first space 20A and the second space 20B. Accordingly, when the outer shell manhole 40 is opened, only the first space 20A, which is a small part of the vacuum space 20, becomes open to the atmosphere. Therefore, the volume of the space that needs to be made vacuum again after closing the outer shell manhole 40 can be reduced.

### <Variations>

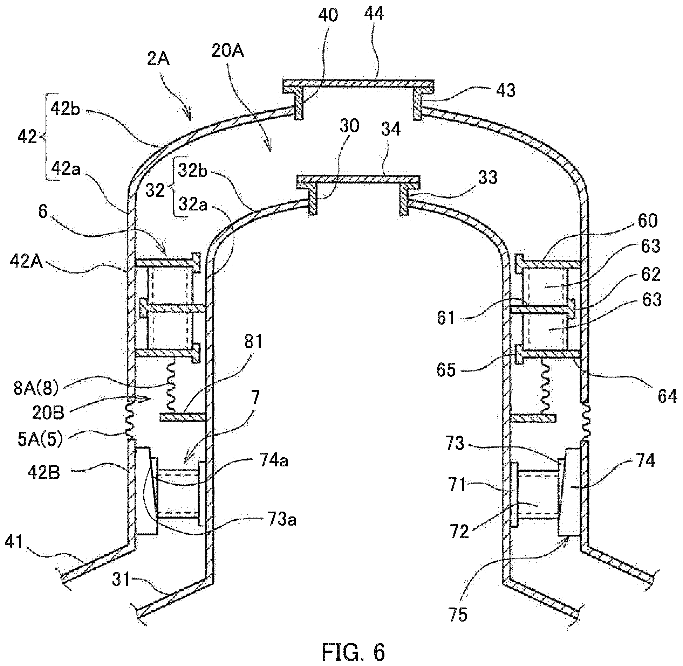

In the above-described embodiment, the deformable member 5 is required to exert elastic force that is sufficient to keep the first supporting members 63 be in contact with the upper support plate 61 against the weight of the movable part 42A of the outer shell dome 42 and the weight of components fixed to the movable part 42A (e.g., a part of the pipes 13, the part penetrating the movable part 42A). In this respect, for example, as shown in FIG. 6, the first supporting members 63 may be additionally placed over the upper support plate 61, and a weight transfer plate 60 sandwiching the first supporting members 63 together with the support plate 61 may be fixed to the movable part 42A of the outer shell dome 42. This configuration makes it possible to reduce a compressive load exerted on the deformable member 5, and thereby a member with low rigidity and low elasticity can be used as the deformable member 5. Similar to the upper support plate 61, the weight transfer plate 60 may be formed by a plurality of pieces, or may be ring-shaped.

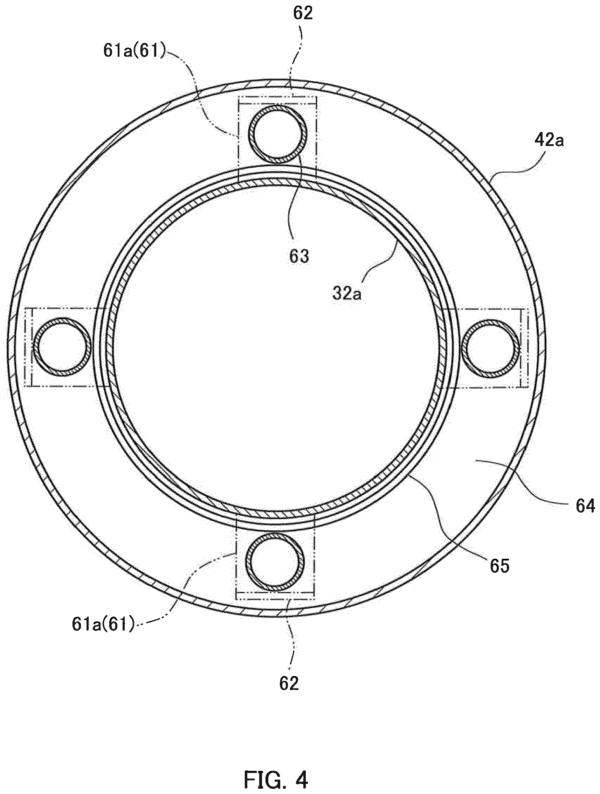

In the variation shown in FIG. 6, it is not essential for the upper first supporting members 63 to be placed over the support plate 61. For example, the upper first supporting members 63 may be disposed such that, referring to FIG. 4, the upper first supporting members 63 and the lower first supporting members 63 are side by side alternately in the circumferential direction. In this case, pieces dedicated for receiving the respective upper first supporting members 63 may be disposed between the pieces 61a forming the upper support plate 61.

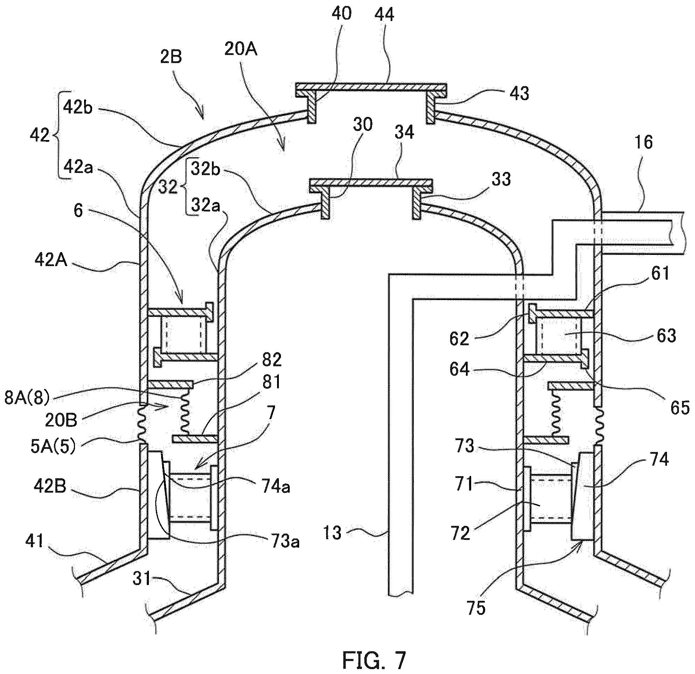

Alternatively, in a case where a member with significantly low elastic force is used as the deformable member 5, the support plate 64 positioned under the first supporting members 63 may be fixed to the inner shell dome 32, and the support plate 61 positioned over the first supporting members 63 may be fixed to the movable part 42A of the outer shell dome 42 as in a double-shell tank 2B of a variation shown in FIG. 7. That is, when thermal contraction of the inner shell 3 occurs, the deformable member 5 may be contracted by, for example, the weight of the movable part 42A of the outer shell dome 42. In this case, below the first restricting mechanism 6, a ring member 82 protruding radially inward from the movable part 42A of the outer shell dome 42 may be provided for fixing the upper end of the blocking member 8. In the case where the ring member 82 is provided below the first restricting mechanism 6 as shown in FIG. 7, the support plate 64 positioned under the first supporting members 63 may be formed by rectangular pieces 61a similar to the support plate 61 positioned over the first supporting members 63.

It should be noted that, in the variation shown in FIG. 7, the lower support plate 64 may be vertically in engagement with the upper support plate 61, such that the lower support plate 64 pulls the upper support plate 61 via the first supporting members 63 when thermal contraction of the inner shell 3 occurs. In this case, a member with relatively high elastic force can be used as the deformable member 5.

The sliding portions 75 of the second restricting mechanism 7 may be disposed between the inner shell dome 32 and the second supporting members 72. In this case, the first sliding members 74 are fixed to the fixed part 42B of the outer shell dome 42 via the second supporting members 72, and the second sliding members 73 are fixed to the inner shell dome 32.

The blocking member 8 may be disposed above the position where the inner shell dome 32 and the outer shell dome 42 are penetrated by the pipes 13 (e.g., between the ceiling wall 32b of the inner shell dome 32 and the ceiling wall 42b of the outer shell dome 42). In this case, however, even if the outer shell manhole 40 is opened, a part of the pipes 13, the part being positioned between the inner shell dome 32 and the outer shell dome 42, cannot be visually checked. On the other hand, as in the above-described embodiment, if the blocking member 8 is disposed at the inner shell main part 31 side as seen from the position where the inner shell dome 32 and the outer shell dome 42 are penetrated by the pipes 13, then the part of the pipes 13, which is positioned between the inner shell dome 32 and the outer shell dome 42, can be inspected when the outer shell manhole 40 is opened.

It is not essential for the annular blocking member 8 to be a member extending in the particular direction defining the protruding direction of the inner shell dome 32, and the blocking member 8 may have any shape, so long as the shape of the blocking member 8 has a central hole. For example, the blocking member 8 may be a member that extends radially in a wavy form. Alternatively, for example, in a case where the peripheral wall 32a of the inner shell dome 32 is provided with a first ring protruding radially outward, and the peripheral wall 42a of the outer shell dome 42 is provided with a second ring protruding radially inward at the same height position as the first ring (not shown in the drawings), the blocking member 8 may be a member with a U-shaped cross section, which is disposed between the first and second rings and which is open upward. Further alternatively, in a case where the first ring is tubular and protrudes upward from the ceiling wall 32b of the inner shell dome 32, and the second ring is tubular, protrudes downward from the ceiling wall 42b of the outer shell dome 42, and has a smaller diameter than that of the first ring, the blocking member 8 may be a washer-like member extending in the radial direction of the inner shell dome 32.

In the above-described embodiment, the manhole 30 and the manhole 40 are provided on the inner shell dome 32 and the outer shell dome 42, respectively. However, as an alternative, the manhole 30 and the manhole 40 may be provided on the inner shell main part 31 and the outer shell main part 41, respectively, at positions away from the inner shell dome 32 and the outer shell dome 42. However, by providing the manhole 30 and the manhole 40 on the inner shell dome 32 and the outer shell dome 42 as in the above-described embodiment, the inner shell dome 32 and the outer shell dome 42 can be effectively utilized to form an inspection passage for inspecting the inside of the inner shell 3.

The movable part 42A of the outer shell dome 42 may be suspended from the tank cover 11 or the like in an assistive manner, and thereby a compressive load exerted on the deformable member 5 may be reduced.

In a case where the bellows pipe 5A extending in the particular direction defining the protruding direction of the inner shell dome 32 is used as the deformable member 5 as in the above-described embodiment, a guide member that prevents lateral displacement of the bellows pipe 5A may be provided.

### (Embodiment 2)

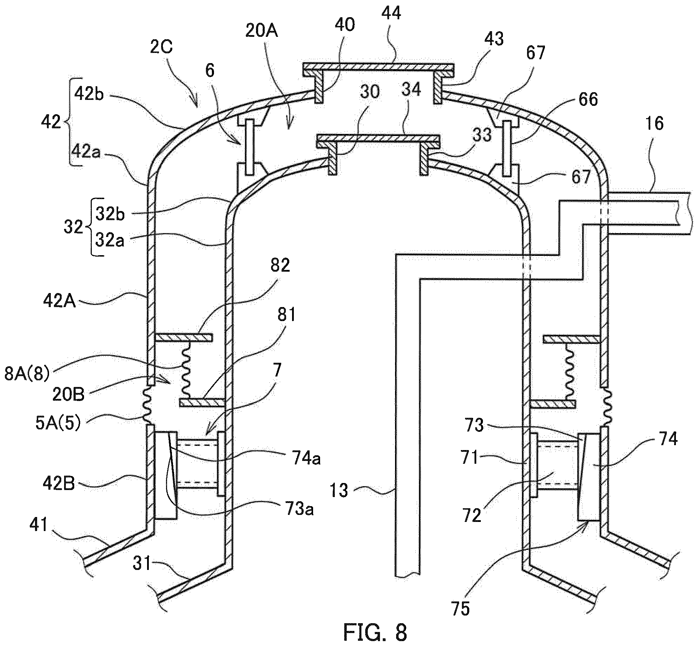

Next, with reference to FIG. 8, a double-shell tank 2C according to Embodiment 2 of the present invention is described. It should be noted that, in this embodiment and Embodiments 3 to 5 described below, the same components as those of Embodiment 1 are denoted by the same reference signs as those used in Embodiment 1, and repeating the same descriptions is avoided below.

In the present embodiment, the first restricting mechanism 6 serves as a tension mechanism, which connects the ceiling wall 42b of the outer shell dome 42 and the ceiling wall 32b of the inner shell dome 32. Specifically, the first restricting mechanism 6 includes: rods 66 extending vertically; and brackets 67 connected to both ends of the rods 66. Upper brackets 67 are mounted to the ceiling wall 42b of the outer shell dome 42, and lower brackets 67 are mounted to the ceiling wall 32b of the inner shell dome 32. The connection between the brackets 67 and the rods 66 is pin connection that allows the brackets 67 and the rods 66 to rotate relative to each other. An elongated hole (not shown) for allowing the inner shell dome 32 to contract is formed in each of either the upper brackets 67 or the lower brackets 67.

It should be noted that two ring members 81 and 82, to which both ends of the blocking member 8 are fixed, are disposed above the second restricting mechanism 7 similar to the double-shell tank 2B shown in FIG. 7.

The same advantages as those provided by Embodiment 1 can be obtained with the above-described configuration. Moreover, by disposing the first restricting mechanism 6 between the ceiling wall 42b of the outer shell dome 42 and the ceiling wall 32b of the inner shell dome 32, a wider space for disposing the pipes 13 can be obtained.

### (Embodiment 3)

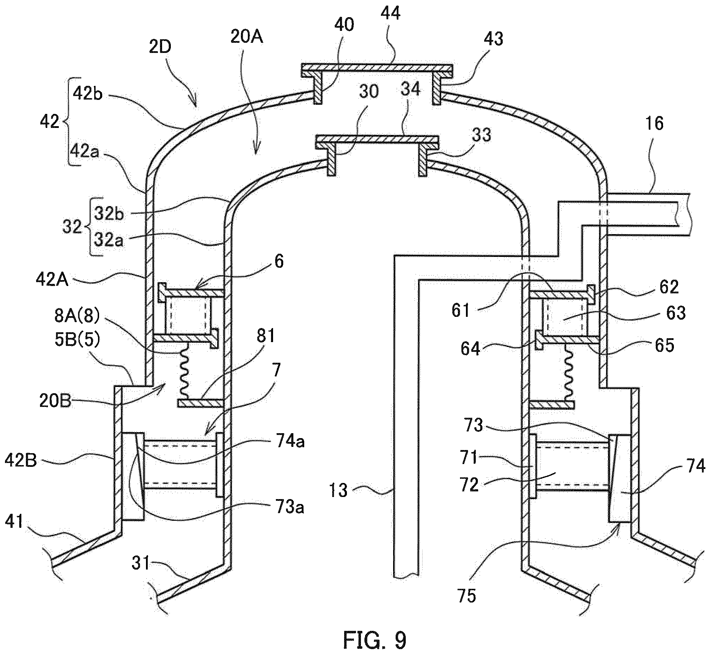

Next, a double-shell tank 2D according to Embodiment 3 of the present invention is described with reference to FIG. 9. In the present embodiment, a ring-shaped flexible plate 5B, which is flattened in the particular direction defining the protruding direction of the inner shell dome 32, is used as the deformable member 5 to be incorporated in the outer shell dome 42. The flexible plate 5B absorbs, by its angular deformation, the movement of the movable part 42A of the outer shell dome 42 when thermal contraction of the inner shell 3 occurs.

The same advantages as those provided by Embodiment 1 can be obtained with the above-described configuration.

### (Embodiment 4)

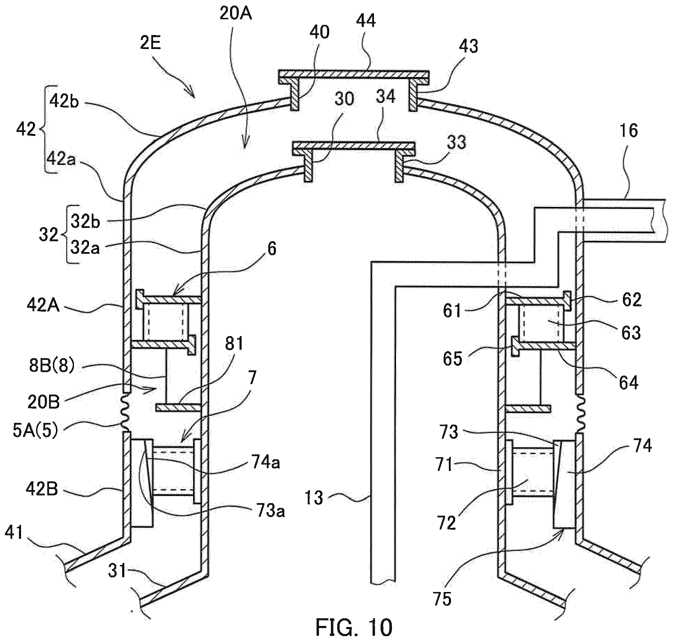

Next, a double-shell tank 2E according to Embodiment 4 of the present invention is described with reference to FIG. 10. In the present embodiment, a straight pipe 8B is used as the annular blocking member 8, which divides the vacuum space 20 between the inner shell 3 and the outer shell 4 into the first space 20A and the second space 20B.

The same advantages as those provided by Embodiment 1 can be obtained with the above-described configuration. When the straight pipe 8B is used as the blocking member 8 instead of the bellows pipe 8A, the thermal transfer passage becomes shorter. In this case, however, the cost can be reduced.

### (Embodiment 5)

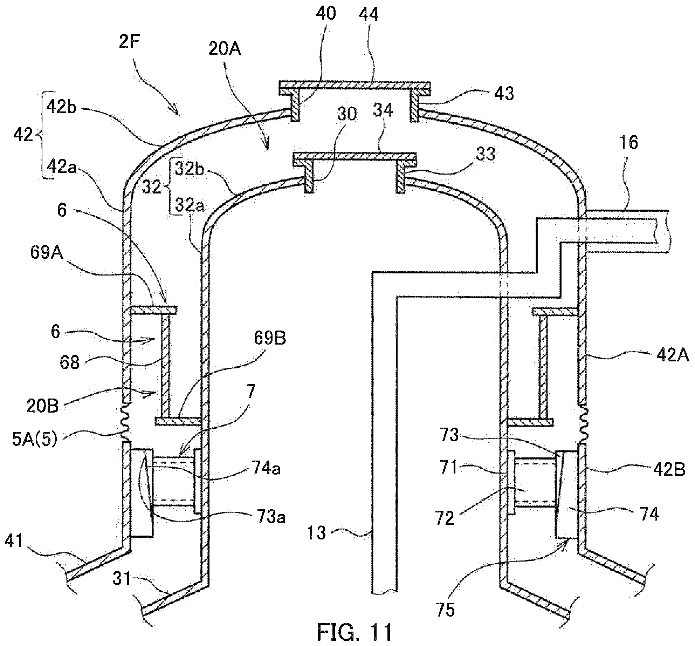

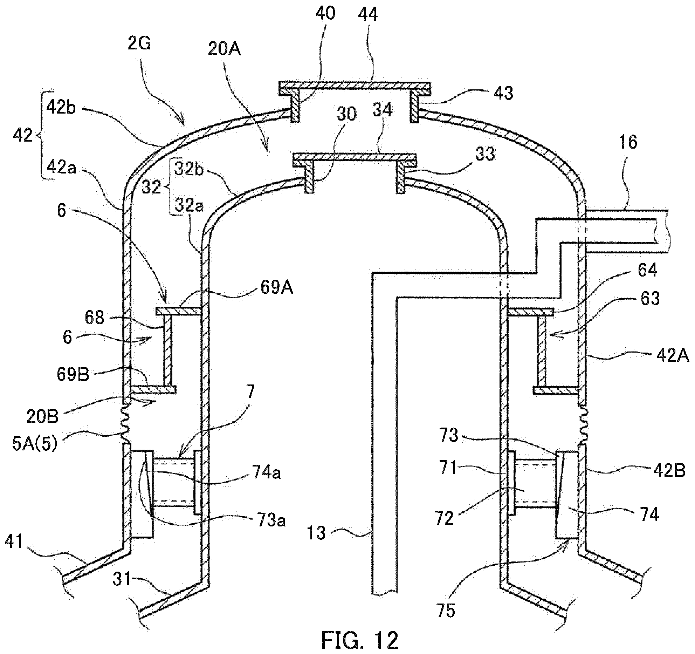

Next, a double-shell tank 2F according to Embodiment 5 of the present invention is described with reference to FIG. 11. In the present embodiment, the first restricting mechanism 6 is configured to double as the blocking member 8. Specifically, the first restricting mechanism 6 includes: a straight pipe 68, through which the inner shell dome 32 is inserted; and ring members 69A and 69B, to which both ends of the straight pipe 68 are fixed. In the present embodiment, the upper ring member 69A is fixed to the movable part 42A of the outer shell dome 42, and the lower ring member 69B is fixed to the inner shell dome 32. However, as an alternative, the upper ring member 69A may be fixed to the inner shell dome 32, and the lower ring member 69B may be fixed to the movable part 42A of the outer shell dome 42 as in a double-shell tank 2G of a variation shown in FIG. 12. The first restricting mechanism 6 allows, by flection of the ring members 69A and 69B and deformation of both ends of the straight pipe 68, the inner shell dome 32 to contract (more exactly, to deform in the radial direction) when thermal contraction of the inner shell 3 occurs.

The same advantages as those provided by Embodiment 1 can be obtained with the above-described configuration. In addition, since the first restricting mechanism 6 doubles as the blocking member 8, the structure can be simplified.

The double-shell tank according to the present invention is useful not only as a tank mounted on a liquefied gas carrier ship, but also as a tank installed on the ground.

### Reference Signs List

- 1: liquefied gas carrier ship
- 13: pipe
- 2A to 2G: double-shell tank
- 20: space (vacuum space)
- 20A: first space
- 20B: second space
- 21: support mechanism
- 3: inner shell
- 30: inner shell manhole
- 31: inner shell main part
- 32: inner shell dome
- 4: outer shell
- 40: outer shell manhole
- 41: outer shell main part
- 42: outer shell dome
- 42A: movable part
- 42B: fixed part
- 5: deformable member
- 5A: bellows pipe
- 5B: flexible plate
- 6: first restricting mechanism
- 61, 64: support plate
- 63: particular-direction supporting member (tubular member)
- 66: rod
- 67: bracket
- 68: straight pipe
- 69: ring member
- 7: second restricting mechanism
- 72: radial-direction supporting member (tubular member)
- 73: second sliding member
- 74: first sliding member
- 75: sliding portion
- 8: blocking member
- 8A: bellows pipe
- 8B: straight pipe

## Claims

1. A horizontal type cylindrical double-shell tank (2A) comprising:
an inner shell (3) including an inner shell main part (51) storing a liquefied gas and an inner shell dome (32) protruding in a particular direction from the inner shell main part (31);
an outer shell (4) including an outer shell main part (41) surrounding the inner shell main part and an outer shell dome (42) surrounding the inner shell dome; and
a pipe (13);
the horizontal type cylindrical double-shell tank being **characterised in that** it further comprises:
a deformable member (5) deformable in the particular direction and incorporated in the outer shell dome so as to divide the outer shell dome into a fixed part (42B) located at a base side with respect to the deformable member and a movable part (42A) located at a distal end side with respect to the deformable member;
a first restricting mechanism (6) disposed between the movable part of the outer shell dome and the inner shell dome, the first restricting mechanism restricting movement of the movable part of the outer shell dome and movement of the inner shell dome relative to each other in the particular direction while allowing the inner shell dome to contract;
a second restricting mechanism (7) disposed between the fixed part of the outer shell dome and the inner shell dome, the second restricting mechanism restricting movement of the inner shell dome in a radial direction while allowing the inner shell dome to contract and allowing the inner shell dome to move in the particular direction relative to the fixed part; and
**in that** the pipe penetrates the movable part of the outer shell dome and the inner shell dome.

2. The double-shell tank according to claim 1, wherein the pipe is bent between the inner shell dome and the outer shell dome.

3. The double-shell tank according to claim 1 or 2, wherein
the second restricting mechanism includes:
radial-direction supporting members (72) disposed around the inner shell dome; and
sliding portions (75) each disposed between either the fixed part of the outer shell dome or the inner shell dome and a corresponding one of the radial-direction supporting members.

4. The double-shell tank according to claim 3, wherein
the radial-direction supporting members are tubular members each extending in the radial direction with respect to the inner shell dome.

5. The double-shell tank according to claim 3 or 4, wherein
each of the sliding portions includes a first sliding member (74) and a second sliding member (73), the first sliding member being disposed at the fixed part side of the outer shell dome and including an inner tapered surface (74a), which slopes away from the inner shell dome in a protruding direction of the inner shell dome, the second sliding member being disposed at the inner shell dome side and including an outer tapered surface (73a), which makes surface contact with the inner tapered surface.

6. The double-shell tank according to any one of claims 1 to 5, wherein
the first restricting mechanism includes:
particular-direction supporting members (63) disposed around the inner shell dome; and
a pair of support plates (61 ;64), one of which is fixed to the movable part of the outer shell dome and the other of which is fixed to the inner shell dome, the support plates sandwiching the particular-direction supporting members.

7. The double-shell tank according to claim 6, wherein
the particular-direction supporting members are tubular members each extending in the particular direction.

8. The double-shell tank according to any one of claims 4 to 7, wherein
each of the tubular members is made of glass fiber reinforced plastic.

9. The double-shell tank according to any one of claims 1 to 8, further comprising a pair of support mechanisms (21) disposed between the inner shell main part and the outer shell main part, the support mechanisms supporting the inner shell main part at respective positions that are spaced apart from each other in an axial direction of the tank, such that the inner shell main part is slidable.

10. The double-shell tank according to any one of claims 1 to 9, wherein
the inner shell dome is provided with an inner shell manhole (30), and
the outer shell dome is provided with an outer shell manhole (40) at a position corresponding to a position of the inner shell manhole.

11. The double-shell tank according to claim 10, wherein a space between the inner shell and the outer shell is a vacuum space (20),
the double-shell tank further comprising an annular blocking member (8) disposed between the inner shell dome and the outer shell dome, the blocking member dividing the vacuum space into a first space (20A) and a second space (20B), the first space including a space between the inner shell manhole and the outer shell manhole, the second space being positioned at the inner shell main part side.

12. The double-shell tank according to claim 11, wherein
the blocking member is disposed at the inner shell main part side as seen from a position where the inner shell dome and the outer shell dome are penetrated by the pipe.

13. The double-shell tank according to any one of claims 1 to 12, wherein
the deformable member is a bellows pipe (8A).

14. A liquefied gas carrier ship (1) comprising the double-shell tank according to any one of claims 1 to 13.

## Patentansprüche

1. Zylindrischer doppelwandiger Tank (2A) von horizontaler Art, umfassend:
eine Innenwand (3), beinhaltend einen Innenwandhauptteil (51), der ein Flüssiggas lagert, und eine Innenwandkuppel (32), die in einer bestimmten Richtung vom Innenwandhauptteil (31) vorsteht;
eine Außenwand (4), beinhaltend einen Außenwandhauptteil (41), der den Innenwandhauptteil umgibt, und eine Außenwandkuppel (42), die die Innenwandkuppel umgibt; und
ein Rohr (13);
wobei der zylindrische doppelwandige Tank von horizontaler Art **dadurch gekennzeichnet ist, dass** er ferner umfasst:
ein verformbares Element (5), das in der bestimmten Richtung verformbar ist und in der Außenwandkuppel eingefügt ist, um so die Außenwandkuppel in einen feststehenden Teil (42B), der in Bezug auf das verformbare Teil unterteilseitig angeordnet ist, und einen beweglichen Teil (42A), der in Bezug auf das verformbare Teil distalendseitig angeordnet ist, zu teilen;
einen ersten Begrenzungsmechanismus (6), der zwischen dem beweglichen Teil der Außenwandkuppel und der Innenwandkuppel angeordnet ist, wobei der erste Begrenzungsmechanismus eine Bewegung des beweglichen Teils der Außenwandkuppel und eine Bewegung der Innenwandkuppel relativ zueinander in der bestimmten Richtung begrenzt, während der Innenwandkuppel möglich ist, sich zusammenzuziehen;
einen zweiten Begrenzungsmechanismus (7), der zwischen dem feststehenden Teil der Außenwandkuppel und der Innenwandkuppel angeordnet ist, wobei der zweite Begrenzungsmechanismus eine Bewegung der Innenwandkuppel in einer radialen Richtung begrenzt, während der Innenwandkuppel möglich ist, sich zusammenzuziehen, und der Innenwandkuppel möglich ist, sich in der bestimmten Richtung relativ zu dem feststehenden Teil zu bewegen; und
dass das Rohr den beweglichen Teil der Außenwandkuppel und die Innenwandkuppel durchdringt.

2. Doppelwandiger Tank nach Anspruch 1, wobei das Rohr zwischen der Innenwandkuppel und der Außenwandkuppel gebogen ist.

3. Doppelwandiger Tank nach Anspruch 1 oder 2, wobei
der zweite Begrenzungsmechanismus beinhaltet:
Radialrichtungsstützelemente (72), die um die Innenwandkuppel angeordnet sind; und
Gleitabschnitte (75), die jeweils zwischen entweder dem feststehenden Teil der Außenwandkuppel oder der Innenwandkuppel und einem entsprechenden der Radialrichtungsstützelemente in angeordnet sind.

4. Doppelwandiger Tank nach Anspruch 3, wobei
die Radialrichtungsstützelemente rohrförmige Elemente sind, die sich jeweils in der radialen Richtung in Bezug auf die Innenwandkuppel erstrecken.

5. Doppelwandiger Tank nach Anspruch 3 oder 4, wobei
jeder der Gleitabschnitte ein erstes Gleitelement (74) und ein zweites Gleitelement (73) beinhaltet, wobei das erste Gleitelement an der Seite des feststehenden Teils der Außenwandkuppel angeordnet ist und eine innere schräge Fläche (74a) beinhaltet, die von der Innenwandkuppel in einer Vorsprungsrichtung der Innenwandkuppel abfällt, wobei das zweite Gleitelement an der Seite der Innenwandkuppel angeordnet ist und eine äußere schräge Fläche (73a) beinhaltet, die mit der innerenschrägen Fläche in Oberflächenkontakt steht.

6. Doppelwandiger Tank nach einem der Ansprüche 1 bis 5, wobei der erste Begrenzungsmechanismus beinhaltet:
richtungsspezifische Stützelemente (63), die um die Innenwandkuppel angeordnet sind; und
ein Paar von Stützplatten (61;64), von welchen eine an dem beweglichen Teil der Außenwandkuppel befestigt ist und die andere an der Innenwandkuppel befestigt ist, wobei die Stützplatten dazwischen die richtungsspezifischen Stützelemente in aufnehmen.

7. Doppelwandiger Tank nach Anspruch 6, wobei
die richtungsspezifischen Stützelemente rohrförmige Elemente sind, die sich jeweils in der spezifischen Richtung erstrecken.

8. Doppelwandiger Tank nach einem der Ansprüche 4 bis 7, wobei
jedes der rohrförmigen Elemente aus glasfaserverstärktem Kunststoff besteht.

9. Doppelwandiger Tank nach einem der Ansprüche 1 bis 8, ferner umfassend ein Paar von Stützmechanismen (21), das zwischen dem Innenwandhauptteil und dem Außenwandhauptteil angeordnet ist, wobei die Stützmechanismen den Innenwandhauptteil an entsprechenden Positionen stützen, die voneinander in der axialen Richtung des Tanks beabstandet sind, sodass der Innenwandhauptteil verschiebbar ist.

10. Doppelwandiger Tank nach einem der Ansprüche 1 bis 9, wobei
die Innenwandkuppel mit einem Innenwandmannloch (30) versehen ist und
die Außenwandkuppel mit einem Außenwandmannloch (40) an einer Position versehen ist, die einer Position des Innenwandmannlochs entspricht.

11. Doppelwandiger Tank nach Anspruch 10, wobei ein Raum zwischen der Innenwand und der Außenwand ein Vakuumraum (20) ist,
wobei der doppelwandige Tank ferner ein ringförmiges Blockierungselement (8) umfasst, das zwischen der Innenwandkuppel und der Außenwandkuppel angeordnet ist, wobei das Blockierungselement den Vakuumraum in einen ersten Raum (20A) und einen zweiten Raum (20B) teilt, wobei der erste Raum einen Raum zwischen dem Innenwandmannloch und dem Außenwandmannloch beinhaltet, wobei der zweite Raum innenwandhauptteilseitig vorgesehen ist.

12. Doppelwandiger Tank nach Anspruch 11, wobei
das Blockierungselement innenwandhauptteilseitig angeordnet ist, betrachtet aus einer Position, wo die Innenwandkuppel und die Außenwandkuppel von dem Rohr durchdrungen sind.

13. Doppelwandiger Tank nach einem der Ansprüche 1 bis 12, wobei
das verformbare Element ein Wellschlauch (8A) ist.

14. Flüssiggastransportschiff (1), umfassend den doppelwandigen Tank nach einem der Ansprüche 1 bis 13.

## Revendications

1. Citerne à double paroi cylindrique de type horizontal (2A) comprenant :
une paroi interne (3) comportant une partie principale de paroi interne (51) stockant un gaz liquéfié et un dôme de paroi interne (32) faisant saillie dans une direction particulière depuis la partie principale de paroi interne (31) ;
une paroi externe (4) comportant une partie principale de paroi externe (41) entourant la partie principale de paroi interne et un dôme de paroi externe (42) entourant le dôme de paroi interne ; et
un tuyau (13) ;
la citerne à double paroi cylindrique de type horizontal étant **caractérisée en ce qu'**elle comprend en outre :
un élément déformable (5) déformable dans la direction particulière et incorporé au dôme de paroi externe de manière à diviser le dôme de paroi externe en une partie fixe (42B) située sur un côté de base par rapport à l'élément déformable et une partie mobile (42A) située sur un côté d'extrémité distale par rapport à l'élément déformable ;
un premier mécanisme de restriction (6) disposé entre la partie mobile du dôme de paroi externe et le dôme de paroi interne, le premier mécanisme de restriction limitant le mouvement de la partie mobile du dôme de paroi externe et le mouvement du dôme de paroi interne l'un par rapport à l'autre dans la direction particulière tout en permettant au dôme de paroi interne de se contracter ;
un second mécanisme de restriction (7) disposé entre la partie fixe du dôme de paroi externe et le dôme de paroi interne, le second mécanisme de restriction limitant le mouvement du dôme de paroi interne dans une direction radiale tout en permettant au dôme de paroi interne de se contracter et en permettant au dôme de paroi interne de se déplacer dans la direction particulière par rapport à la partie fixe ; et
**en ce que** le tuyau pénètre dans la partie mobile du dôme de paroi externe et dans le dôme de paroi interne.

2. Citerne à double paroi selon la revendication 1, dans laquelle le tuyau est recourbé entre le dôme de paroi interne et le dôme de paroi externe.

3. Citerne à double paroi selon la revendication 1 ou 2, dans laquelle :
le second mécanisme de restriction comprend :
des éléments de support de direction radiale (72) disposés autour du dôme de paroi interne ; et
des parties coulissantes (75) disposées chacune entre la partie fixe du dôme de paroi externe ou du dôme de paroi interne et l'un correspondant des éléments de support de direction radiale.

4. Citerne à double paroi selon la revendication 3, dans laquelle :
les éléments de support de direction radiale sont des éléments tubulaires s'étendant chacun dans la direction radiale par rapport au dôme de paroi interne.

5. Citerne à double paroi selon la revendication 3 ou 4, dans laquelle :
chacune des parties coulissantes comprend un premier élément coulissant (74) et un second élément coulissant (73), le premier élément coulissant étant disposé sur le côté de partie fixe du dôme de paroi externe et comprenant une surface interne conique (74a) qui s'incline en s'évasant du dôme de paroi interne dans une direction saillante du dôme de paroi interne, le second élément coulissant étant disposé sur le côté de dôme de paroi interne et comprenant une surface conique externe (73a) qui établit un contact de surface avec la surface conique interne.

6. Citerne à double paroi selon l'une quelconque des revendications 1 à 5, dans laquelle :
le premier mécanisme de restriction comprend :
des éléments de support de direction particulière (63) disposés autour du dôme de paroi interne ; et
une paire de plaques de support (61 ; 64) dont l'une est fixée à la partie mobile du dôme de paroi externe et dont l'autre est fixée au dôme de paroi interne, les plaques de support prenant en sandwich les éléments de support de direction particulière.

7. Citerne à double paroi selon la revendication 6, dans laquelle :
les éléments de support de direction particulière sont des éléments tubulaires s'étendant chacun dans la direction particulière.

8. Citerne à double paroi selon l'une quelconque des revendications 4 à 7, dans laquelle :
chacun des éléments tubulaires est constitué d'une matière plastique renforcée par des fibres de verre.

9. Citerne à double paroi selon l'une quelconque des revendications 1 à 8, comprenant en outre une paire de mécanismes de support (21) disposés entre la partie principale de paroi interne et la partie principale de paroi externe, les mécanismes de support supportant la partie principale de paroi interne à des positions respectives qui sont espacées l'une de l'autre dans une direction axiale de la citerne de sorte que la partie principale de paroi interne puisse coulisser.

10. Citerne à double paroi selon l'une quelconque des revendications 1 à 9, dans laquelle :
le dôme de paroi interne est pourvu d'un trou d'homme de paroi interne (30) et
le dôme de paroi externe est pourvu d'un trou d'homme de paroi externe (40) à une position correspondant à une position du trou d'homme de paroi interne.

11. Citerne à double paroi selon la revendication 10, dans laquelle un espace entre la paroi interne et la paroi externe est un espace sous vide (20),
la citerne à double paroi comprenant en outre un élément annulaire bloquant (8) disposé entre le dôme de paroi interne et le dôme de paroi externe, l'élément bloquant divisant l'espace sous vide en un premier espace (20A) et un second espace (20B), le premier espace comprenant un espace entre le trou d'homme de paroi interne et le trou d'homme de paroi externe, le second espace étant positionné du côté de partie principale de paroi interne.

12. Citerne à double paroi selon la revendication 11, dans laquelle :
l'élément bloquant est disposé du côté de partie principale de paroi interne tel qu'on peut l'observer d'une position où le dôme de paroi interne et le dôme de paroi externe sont pénétrés par le tuyau.

13. Citerne à double paroi selon l'une quelconque des revendications 1 à 12, dans laquelle :
l'élément déformable est un tuyau à soufflet (8A).

14. Bateau de transport de gaz liquéfié (1) comprenant la citerne à double paroi selon l'une quelconque des revendications 1 à 13.
